# EUROPEAN PATENT SPECIFICATION

(11) **EP 1 767 288 B1**
(45) Date of publication and mention of the grant of the patent: **23.07.2014**
(21) Application number: 05727076.1
(22) Date of filing: 22.03.2005
(51) Int. Cl.: B22C 9/10, B22C 9/24, F16C 3/08, F16C 3/14

(54) **CAST HOLLOW CRANKSHAFT AND METHOD OF MANUFACTURING THE SAME**
GEGOSSENE HOHLE KURBELWELLE UND HERSTELLUNGSVERFAHREN DAFÜR
MOULAGE D'UN VILEBREQUIN CREUX ET PROCÉDÉ DE FABRICATION

(30) Priority: 16.04.2004 JP 2004121829
(43) Date of publication of application: 28.03.2007
(73) Proprietor: Kabushiki Kaisha Riken, Tokyo 102-8202 (JP); TOYOTA JIDOSHA KABUSHIKI KAISHA, Toyota-shi, Aichi-ken, 471-8571 (JP)
(72) Inventor: SHIBANO, Mitsuhiro, Kabushiki Kaisha Riken, Kashiwazaki-shi, Niigata 9458555 (JP); TOBITA, Tomoyuki, Kabushiki Kaisha Riken, Kashiwazaki-shi, Niigata 9458555 (JP); HAYAMA, Kenji, TOYOTA JIDOSHA KABUSHIKI KAISHA, Toyota-shi, Aichi 4718571 (JP)
(74) Representative: Volpert, Marcus
(86) International application number: PCT/JP2005/005148
(87) International publication number: WO 2005/099933

(56) References cited:
- WO-A1-03/016730
- GB-A- 481 928
- JP-A- 56 117 861
- JP-A- 56 117 861
- JP-A- 59 229 258

## Description

### BACKGROUND OF THE INVENTION

### 1. Field of the Invention

The present invention relates to a cast hollow crankshaft used in an internal-combustion engine according to the preamble of claim 1. More particularly, the present invention relates to a hollow crankshaft in which a portion around its axis is cored out during casting, and a manufacturing method of the same according to the preamble of claim 3.

### 2. Description of the Related Art

As for internal-combustion engines, better mileage and higher performance are demanded. As for crankshafts, reduction in weight and friction loss is demanded. Moreover, simplification of a manufacturing process is indispensable for reduction in cost that is recently demanded. In general, ductile cast iron is used for a cast crankshaft. In this case, however, the entire weight of the crankshaft increases because the shaft diameter or the like has to be made larger in order to ensure the mechanical properties. This causes a problem of increase of a torque required when the internal-combustion engine is started, for example.

A hollow crankshaft that is formed by enveloped-casting a thin-walled metal pipe to be bonded to the inside of the crankshaft is known as a solution of the above problem. In this crankshaft, reduction in weight is achieved and machining of oil holes is omitted. See Japanese Patent Laid-Open Publication No. Sho 56-147914, for example. However, it is difficult to manufacture the thin-walled metal pipe by bending a pipe in an axial direction, which serves as a hollow portion, with small-diameter pipes extending from that pipe like branches, which serves as oil holes. This crankshaft also has various problems related to manufacturing techniques, the quality, the cost, and the like, e.g., insufficient toughness caused by hardening of the inside of the crankshaft due to a chiller effect of the pipe during casting, and generation of internal deficiencies caused by adhesion of the pipe and the cast iron material, oxides on the pipe surface, or the like. Thus, this crankshaft is not practical.

Moreover, it is known that a pin portion, a journal portion, and an arm portion of the crankshaft are successively formed by coring-out using a core to reduce the weight of the crankshaft (see Japanese Utility-Model Laid-Open Publication No. Sho 57-139722, for example). In addition, it is pointed out that the strength of the core for the arm portion is insufficient in the above technique. In order to overcome that problem, Japanese Utility-Model Laid-Open Publication No. Sho 59-177820 describes a structure in which a swelling portion is provided in a shoulder of the arm portion of the crankshaft to increase a cross-sectional area of the core for the arm portion and baseboards at both ends of the core support the entire core. However, making the arm portion thinner by coring out has a limit because large stress is applied to the crankshaft. The size and location of the swelling portion are also limited in view of the design of the internal-combustion engine. Even if the cross-sectional area of the core for the arm portion is made larger in the structure in which the baseboards at both ends of the core support the entire core, the strength of the core for the arm portion is still insufficient because the core for the journal portion and the core for the pin portion become larger and heavier, as compared with the core for the arm portion. Especially, in case of using a bending one-piece core for a multi-cylinder crankshaft or the like, large stress is partially applied to the core, unlike a case of using a straight core. Thus, the strength of the core is insufficient even when the cross-sectional area of the core for the arm portion is made larger. This causes bending of the core when it is set in a mold, or floating or a damage of the core during pouring of molten metal.

A chaplet is generally used for covering the insufficient strength of the core. However, the use of chaplet is not preferable when a hollow crankshaft is manufactured. This is because the chaplet contains a material different from molten metal to which various metal coating processes are performed. For example, a chaplet for iron casting contains a material different from molten metal for which an anticorrosion treatment is performed by tinning. Moreover, the chaplet is melted to the molten metal to finally become a part of the resultant casting. In addition, if cast sand remains in the hollow portion of the crankshaft, it falls off and largely affects the engine. That is, the cast sand in the hollowing portion after coring out should be completely removed. For this reason, the hollow crankshaft also has a technical problem. Furthermore, the oil holes of the journal portion and the pin portion of the crankshaft are formed by machining. Thus, burr and chips remain in the hollow portion and cause a similar problem to the above technical problem.

In order to improve the strength of the core, the amount of resin added to the cast sand or the like can be increased. However, the increase in resin amount causes generation of gas and has a high possibility of causing internal deficiencies. Thus, the increase in resin amount is not preferable.

Therefore, in recent years, a through hole is formed by machining so as to extend from the journal portion to a connecting rod bearing of the pin portion. Oil is supplied to a connecting rod and the pin portion via a supply port provided in the journal portion (see Japanese Patent Laid-Open Publication No. Hei 7-027126 and Handbook of Automotive Technology, Vol. 2, Design, 1991, published by Seikosha, p. 84).

However, the aforementioned method employing the machining cannot largely reduce the weight of the crankshaft, unlike the aforementioned method employing the casting. Moreover, because a cylinder block is formed of aluminum, clearance of the journal portion becomes larger due to a difference of thermal expansion and oil leak increases when oil is supplied from the journal portion to the crankshaft. Thus, oil supply efficiency is degraded. In addition, the aforementioned method employing the machining requires a difficult process, i.e., a process for diagonally forming the oil hole from the journal portion to the connecting-rod bearing. Thus, the method employing the machining is not preferable with respect to the manufacturing and the cost.

The inventors of the present application earnestly made researches in order to overcome the aforementioned problems. As a result of the researches, the inventors found that both reduction in weight of a crankshaft and formation of oil holes can be achieved by making a cross section of a core elliptical, providing baseboard portions to be integrated with the core at locations that correspond to the oil holes in a journal portion and a pin portion of the crankshaft, respectively, and then performing casting. In this case, bending of the core and floating of the core during pouring of molten metal can be also prevented effectively. In this manner, the inventors completed the present nvention.

A cast hollow crankshaft according to the preamble of claim 1 and a method for manufacturing same according to the preamble of claim 3 are known from JP 56 117 861 A.

### SUMMARY OF THE INVENTTON

The present invention was made based on the above experiments. It is an object of the present invention to provide a cast hollow crankshaft and a manufacturing method of that crankshaft, which can further reduce the weight of the crankshaft by coring out, can prevent bending of a core during manufacturing of the crankshaft and floating of the core during pouring of molten metal so as to achieve precise manufacturing and provide the good productivity, and can eliminate the need of machining of oil holes.

A baseboard portion for forming the oil hole may be molded together with a core for forming a hollow portion as one piece. Alternatively, the baseboard portion formed as a separate piece from the core may be assembled and integrated with the core later. The use of the baseboard portion integrated with the core enables the oil hole to be formed without post-processing.

According to the invention, in the cast hollow crankshaft according to the characterising clause of claim 1, a cross section of a hollow portion at the journal portion and/or the pin portion is elliptical.

The weight of the crankshaft can be further reduced by making the cross section of the hollow portion elliptical. In addition, the following advantages are achieved. The pin portion and the journal portion that are hollow are effective in reduction in weight of the crankshaft. To employ the elliptical cross section in which the thickness is thicker at a position (in a direction) where the sufficient strength is required and is thinner at other positions can achieve optimal reduction in weight. Moreover, the strength of bending portions of a bending core that correspond to the pin portion and the journal portion, respectively, has to be improved for manufacturing reasons. The elliptical cross section of the hollow portion is also effective in improving the strength of the core. Furthermore, making the cross section of the hollow portion elliptical can shorten the core for forming the oil hole (i.e., the baseboard portion).

According to a further aspect of the invention, in the cast hollow crankshaft mentioned above, an arm portion has a hollow portion having an elliptical cross section.

Making the cross section of the hollow portion of the arm portion elliptical has the following advantages. The hollow arm portion is effective in reduction in weight of the crankshaft. To employ the elliptical cross section in which the thickness of the wall is thicker at a position (in a direction) where the sufficient strength is required and is thinner at other positions can achieve optimal reduction in weight. Moreover, the strength of a portion of the bending core that corresponds to the arm portion has to be improved for manufacturing reasons. The elliptical cross section of the hollow portion is effective in improving the strength of the core.

According to the invention, in manufacturing of the cast hollow crankshaft mentioned above or its material, a core bending in a horizontal direction is used, the core having an elliptical cross section in which a major axis extends in a vertical direction at a journal part and/or a pin part, the journal part and the pin part of the core corresponding to the journal portion and the pin portion of the crankshaft, respectively.

Since the cross section of the core has an elliptical shape in which the major axis extends in the vertical direction, the strength of the core can be improved. Moreover, the length of the core, that serves as a baseboard portion for forming an oil hole in the vertical direction, can also be shortened. Thus, it is possible to make the core more stable.

It should be noted that the material of the crankshaft described here is used to mean a product that is obtained by casting but is not machined.

The elliptical shape in which the major axis extends in the vertical direction is advantageous for the following reason. In the case where the core is supported at its both ends, force that bends the core is applied to a portion of the core between points of support because of gravity. In addition, during pouring of molten melt, buoyancy is applied to the core. However, the deviation of the core or the like caused by that force or buoyancy can be prevented by employing the elliptical shape in which the thickness of the core is thicker in the vertical direction to improve the strength of the core. Moreover, it is possible to surely prevent the deviation of the core by using a portion of the core that extends in the vertical direction as the baseboard portion

According to a further aspect of the invention, in the manufacturing of the cast hollow crankshaft or its material , the hollow portion and the oil holes are formed integrally with each other by enveloped-casting with the use of the core that bends in the horizontal direction and includes a plurality of baseboard portions extending toward a mold at the journal part and/or the pin part.

In the further aspect of the invention, the heavy journal part, or the heavy pin part, or both the journal part and the pin part can be fixed by the baseboard portions of the core. Thus, precise casting can be easily performed without a chaplet for reinforcing the core. Moreover, the oil holes that do not require post-process can be formed.

According to still a further aspect of the invention, in the manufacturing of the cast hollow crankshaft or its material in the two last mentioned aspects, the hollow portion and the oil holes are formed integrally with each other by enveloped-casting with the use of the core that bends in the horizontal direction and includes a plurality of baseboard portions extending vertically toward the mold at the journal part and/or the pin part.

In the this last mentioned aspect of the invention, the heavy journal part, or the heavy pin part, or both the journal part and the pin part can be fixed by the baseboard portions of the core extending in the vertical direction from above and below. Thus, precise casting can be easily performed without a chaplet for reinforcing the core. Moreover, the oil holes that do not require post-process can be formed.

According to a further aspect of the invention, in the manufacturing of the cast hollow crankshaft or its material in any one of the method aspects, a cross section of a core for the arm portion of the crankshaft has an elliptical cross section in which a major axis extends in a vertical direction.

According to the present invention, the weight of the crankshaft can be reduced by forming the crankshaft to be hollow by means of the core, without degrading the mechanical properties. Moreover, the need of machining of the oil holes can be eliminated by forming the oil holes of the journal portion and the oil holes of the pin portion integrally with the hollow portion inside the crankshaft.

In addition, according to the present invention, the hollow portion is formed to be elliptical in cross section and the oil hole of the journal portion and/or the oil hole of the pin portion are/is cored out by using the core. Thus, further reduction in weight of the crankshaft and improvement of the productivity that reduces the cost can be achieved.

According to the manufacturing method of the present invention, it is possible to surely fix the core by using the core that bends in the horizontal direction and includes the baseboard portion at at least one of the journal part and the pin part. Thus, precise casting can be performed and, at the same time, the oil hole can be formed. Moreover, improvement of the strength of the core itself and reduction in weight of the crankshaft can be achieved by forming the core for the journal portion and the pin portion to have an elliptical shape in cross section in which the major axis extends in the vertical direction.

### BRIEF DESCRIPTION OF THE DRAWINGS

Fig. 1 is a cross-sectional view of a cast hollow crankshaft according to one embodiment of the present invention;
Fig. 2 is a cross-sectional view of the cast hollow crankshaft, taken along the line A-A in Fig. 1;
Fig. 3 is a partial cross-sectional view (in a vertical direction) of a mold and a core used in a manufacturing method of the present invention;
Fig. 4 is a partial cross-sectional view (in a horizontal direction) of the mold and the core used in the manufacturing method of the present invention;
Fig. 5 shows an exemplary cross section of the crankshaft, taken along the line B-B in Fig. 2;
Fig. 6 shows another exemplary cross section of the crankshaft, taken along the line B-B in Fig. 2; and
Fig. 7 shows an exemplary cross section of the crankshaft, taken along the line C-C in Fig. 2.

### DETAILED DESCRIPTION OF THE INVENTION

A cast hollow crankshaft and a manufacturing method of that crankshaft according to an embodiment of the present invention are now described in detail, with reference to the drawings.

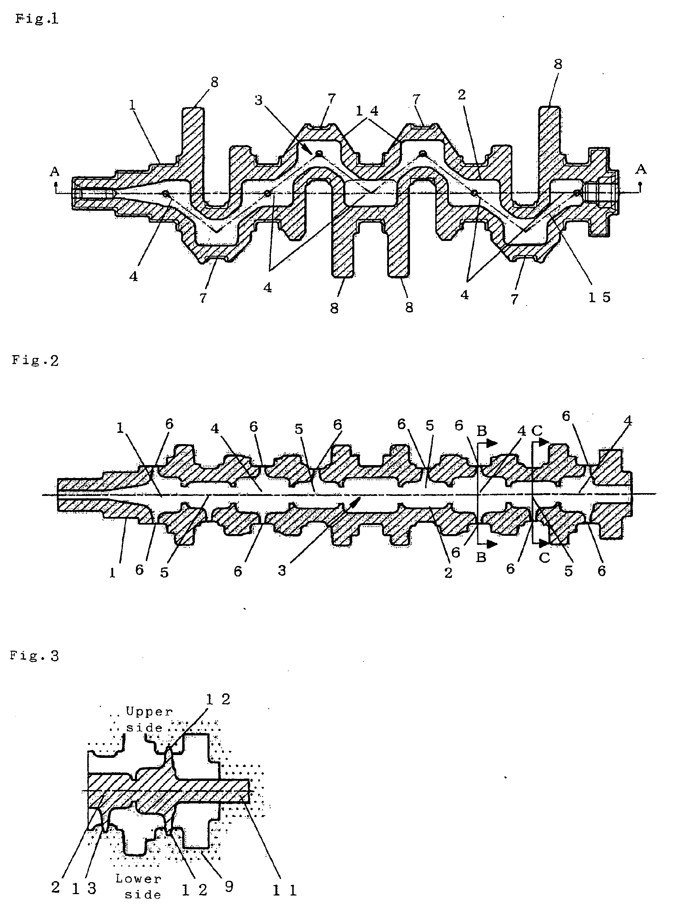

Figs. 1 and 2 are cross-sectional views of the cast hollow crankshaft (material) according to one embodiment of the present invention.

A crankshaft body 1 includes a journal portion 4 and an arm portion 15 that have a plurality of portions bending in a horizontal direction and have an elliptical cross section; a pin portion 5 having a circular cross section; and a hollow portion 3 that extends through both axial ends. Cross sections of the pin portion 5 and the both axial ends of the crankshaft body 1 may be formed to be elliptical.

A plurality of oil holes are formed in the journal portion 4 and the pin portion 5 by using baseboard portions integrated with a core. The oil holes 6 in the journal portion 4 and the pin portion 5 can be provided in such a manner that the oil holes are arranged in either one of upper and lower walls of each of the journal portions 4 and the pin portions 5 or in both the upper and lower walls. The size of the oil hole 6 is determined considering the size of the crankshaft itself or the like. In general, the size of the oil hole 6 is preferably φ5 mm or less in case of an automotive engine.

The crankshaft body 1 further includes pin portions 7 of connecting-rod bearings and crank weights 8 as balance weights.

In the present embodiment, a case where the cross section of the hollow portion 3 is elliptical only at the journal portion 4 is described. However, the cross section of the hollow portion 3 may be elliptical at both the journal portion 4 and the pin portion 5 or only at the pin portion 5. A case where the cross section of the hollow portion 3 is elliptical at both the journal portion 4 and the pin portion 5 is the most preferable embodiment. However, the cross section of the hollow section may be elliptical at either one of the journal portion 4 and the pin portion 5, depending on the shape and size of the crankshaft.

The reason why the cross section of the hollow portion 3 is made elliptical at the arm portion 15 of the hollow crankshaft is the same as that for the journal portion 4 and the pin portion 5.

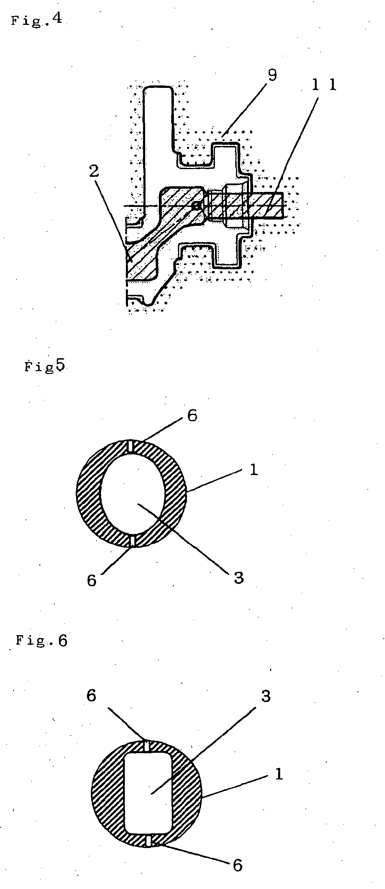

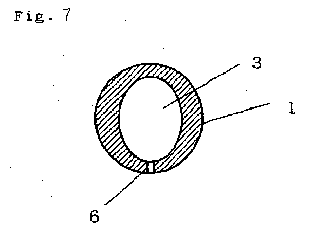

Figs. 5 and 7 show cross sections of the cast hollow crankshaft (material) shown in Fig. 1 at the journal portion 4 and the pin portion 5, cut along a radial direction. In this example, the hollow portion 3 has an elliptical shape in which a major axis thereof extends in a vertical direction. The journal portion 4 and the pin portion 5 have oil holes 6 in the upper and lower walls. In the present embodiment, a ratio of the major axis to the minor axis of the elliptical shape of the cross section of the hollow portion 3 is 3:2. However, this ratio can be changed within a range in which the sufficient strength is ensured. Moreover, the cross section of the hollow portion 3 may have a shape of a quadrangle with rounded corners, as shown in Fig. 6, in order to reduce the weight of the crankshaft, as long as this shape does not adversely affect the strength.

Next, manufacturing of the hollow crankshaft according to the present embodiment is described.

After a casting mold (sand mold) 9 shown in Figs. 3 and 4 is molded, a core 2 is supported at both ends serving as baseboard portions 11 by a lower mold before an upper mold is placed on the lower mold. At the same time, baseboard portions of a journal part 12 and a pin part 13 of the core 2 are fixed to the casting mold (sand mold) 9. Please note that the journal part 12 and the pin part 13 of the core 2 correspond to the journal portion 4 and the pin portion 5 of the crankshaft, respectively. In this manner, deformation and displacement of the core 2 are prevented. Then, the upper mold is assembled with the lower mold and molten metal is poured, thereby forming the hollow portion of each of the journal portion 4, the pin portion 5, and the arm portion 15 and forming the oil holes 6 of the journal portion 4 and the pin portion 5 simultaneously.

The baseboard portions 11 described here are portions of the core 2 that serve as handles for fixing the core 2 to the casting mold (sand mold) 9. Those portions are arranged at both ends of the core 2 in the present embodiment. In addition, since the core 2 is fixed to the casting mold (sand mold) 9, the journal part 12 and the pin part 13 of the core 2 also serve as baseboard portions. In the present embodiment, the oil holes 6 are formed by the journal part 12 and the pin part 13 that are approximately conical and have a draft angle of φ5 mm or less.

The material used in casting is ductile cast iron such as FCD700, alloyed cast iron, and the like.

Other than the baseboard portions of the journal parts 12 and the pin part 13, a baseboard portion may be formed on the core 2 at a portion corresponding to a side face 14 of the pin portion of the crankshaft so as to extend in the horizontal direction. That baseboard portion is used to form an opening in the side face 14. In this case, the core 2 can be surely fixed in the horizontal direction, and a process for removing sand such as shot blasting can be easily performed through the opening.

A molten salt treatment such as Kolene process can be performed for removing sand from the cast hollow crankshaft (material) that has been cast by the manufacturing method of the present embodiment and includes the hollow portion 3 and the oil holes 6 formed integrally with each other. Kolene process can be combined with the manufacturing method of the cast hollow crankshaft of the present embodiment.

As described above, the hollow crankshaft cast by the manufacturing method of the present embodiment can be a sound hollow cast that does not have a deficiency such as a shrinkage cavity therein, and can reduce the weight from that of a solid crankshaft by 10 to 20 %. Moreover, lubricant can be supplied from ends of the crankshaft to the center thereof. Thus, an efficient path for lubricant can be established. Furthermore, manufacturing, setting, and the like of the core can be simplified and the need of the machining of the oil holes can be eliminated. Thus, the productivity can be improved.

In addition, reduction in weight of the cast hollow crankshaft of the present embodiment is achieved not by modification to the outside of the crankshaft but by modification to the inside of the journal portion 4 and the pin portion 5. Therefore, flexural rigidity can be ensured without reducing the maximum stress in the crankshaft, that is generated at a rounded corner portion of the pin portion 5 to which knurling is performed.

## Claims

1. A cast hollow crankshaft for an internal-combustion engine, the crankshaft including an oil hole (6) in a journal portion (4) and/or an oil hole(6) in a pin portion (5), the oil holes (6) being formed by coring out, **characterized in that** a cross section of a hollow portion at the journal portion (4) and/or the pin portion (5) is elliptical due to a core (2) bending in a horizontal direction and having an ellipticalcross section in which a major axis extends in a vertical direction at a journal part (12) and/or a pin part (13).

2. The cast hollow crankshaft according to claim 1, **characterized in that** an arm portion (15) has a hollow portion having an elliptical cross section.

3. A method for manufacturing a cast hollow crankshaft for an internal-combustion engine, the crankshaft including an oil hole (6) in a journal portion (4) and/or an oil hole (6) in a pin portion (5), the oil holes (6) being formed by coring out, **characterized by** using a core (2) bending in a horizontal direction and having an elliptical cross section in which a major axis extends in a vertical direction at a journal part (12) and/or a pin part (13), the journal part (12) and the pin part (13) of the core (2) corresponding to the journal portion (4) and the pin portion (5) of the crankshaft, respectively; and forming a hollow portion (3) whose cross section at the journal portion (4) and/or the pin portion (5) is elliptical.

4. The method for manufacturing a cast hollow crankshaft according to claim 3, **characterized in that** the hollow portion (3) and the oil holes(6) are formed integrally with each other by enveloped-casting with the use of the core (2) that bends in the horizontal direction and includes a plurality of baseboard portions extending toward a mold at the journal part (12) and/or the pin part (13).

5. The method for manufacturing a cast hollow crankshaft according to claim 3 or 4, **characterized in that** the hollow portion (3) and the oil holes(6) are formed integrally with each other by enveloped-casting with the use of the core (2) that bends in the horizontal direction and includes a plurality of baseboard portions extending vertically toward the mold at the journal part (12) and/or the pin part (13).

6. The method for manufacturing a cast hollow crankshaft according to any one of claims 3 to 5, **characterized in that** a cross section of a core (2) for the arm portion (15) of the crankshaft has an elliptical cross section in which a major axis extends in a vertical direction.

## Patentansprüche

1. Gegossene hohle Kurbelwelle für einen Verbrennungsmotor, die eine Ölbohrung (6) in einem Zapfenabschnitt (4) aufweist, und / oder eine Ölbohrung (6) in einem Stiftabschnitt (5), wobei die Ölbohrungen durch Kernbohren gebildet werden, **dadurch gekennzeichnet, daß** ein Querschnitt eines hohlen Abschnitts an dem Zapfenabschnitt (4) und / oder dem Stiftabschnitt (5) aufgrund eines Kerns (2) elliptisch ist, wobei sich der Kern in einer waagerechten Richtung biegt und einen elliptischen Querschnitt hat, indem sich eine Hauptachse an einem Zapfenteil (12) und / oder einem Stiftteil (13) in einer senkrechten Richtung erstreckt.

2. Gegossene hohle Kurbelwelle nach Anspruch 1, **dadurch gekennzeichnet, daß** ein Armabschnitt (15) einen hohlen Teil mit einem elliptischen Querschnitt aufweist.

3. Verfahren zur Herstellung einer gegossenen hohlen Kurbelwelle für einen Verbrennungsmotor, wobei die Kurbelwelle eine Ölbohrung (6) in einem Zapfenabschnitt (4) und / oder eine Ölbohrung (6) in einem Stiftabschnitt (5) aufweist und die Ölbohrungen (6) durch Kernbohren gebildet sind, **gekennzeichnet durch** Verwendung eines Kerns (2), der sich in einer waagerechten Richtung biegt und einen elliptischen Querschnitt aufweist, indem eine Hauptachse sich an einem Zapfenteil (12) und / oder einem Stiftteil (13) in einer senkrechten Richtung erstreckt, und daß der Zapfenteil (12) und der Stiftteil (13) des Kerns (2) dem Zapfenabschnitt (4) bzw. dem Stiftabschnitt (5) der Kurbelwelle entsprechen und einen hohlen Abschnitt (3) bilden, dessen Querschnitt an dem Zapfenabschnitt (4) und / oder dem Stiftabschnitt (5) elliptisch ist.

4. Verfahren zur Herstellung einer gegossenen hohlen Kurbelwelle nach Anspruch 3, **dadurch gekennzeichnet, daß** der hohle Abschnitt (3) und die Ölbohrungen (6) miteinander einteilig gebildet werden, und zwar durch umhüllendes Gießen unter Verwendung des Kerns (2), der sich in die waagerechte Richtung biegt und mehrere Sockelabschnitte aufweist, die sich in Richtung einer Gießform an dem Zapfenteil (12) und / oder dem Stiftteil (13) erstrecken.

5. Verfahren zur Herstellung einer gegossenen hohlen Kurbelwelle nach Anspruch 3 oder 4, **dadurch gekennzeichnet, daß** der hohle Abschnitt (3) und die Ölbohrungen (6) einteilig miteinander geformt sind, und zwar durch umhüllendes Gießen unter Verwendung des Kerns (2), der sich in die waagerechte Richtung biegt und mehrere Sockelabschnitte aufweist, die sich senkrecht in Richtung auf die Gießform an dem Zapfenteil (12) und / oder dem Stiftteil (13) erstrecken.

6. Verfahren zur Herstellung einer gegossenen hohlen Kurbelwelle nach einem der Ansprüche 3 bis 5, **dadurch gekennzeichnet, daß** der Querschnitt des Kerns (2) für den Armabschnitt (15) der Kurbelwelle ein elliptischer Querschnitt ist, bei dem sich die Hauptachse in einer senkrechten Richtung erstreckt.

## Revendications

1. Vilebrequin creux moulé pour un moteur à combustion interne, le vilebrequin incluant un trou à huile (6) dans une portion de palier (4) et/ou un trou à huile (6) dans une portion de broche (5), les trous à huile (6) étant formés par moulage sur sable, **caractérisé en ce qu'**une section transversale d'une portion creuse au niveau de la portion de palier (4) et/ou de la portion de broche (5) est elliptique en raison d'un noyau (2) qui est cintré dans une direction horizontale et ayant une section transversale elliptique dans laquelle un grand axe s'étend dans une direction verticale au niveau d'une partie de palier (12) et/ou d'une partie de broche (13).

2. Vilebrequin creux moulé selon la revendication 1, **caractérisé en ce qu'**une portion de bras (15) comprend une portion creuse ayant une section transversale elliptique.

3. Procédé pour fabriquer un vilebrequin creux moulé pour un moteur à combustion interne, le vilebrequin incluant un trou à huile (6) dans une portion de palier (4) et/ou un trou à huile (6) dans une portion de broche (5), les trous à huile (6) étant formés par moulage sur sable, **caractérisé en ce que** l'on utilise un noyau (2) qui est cintré dans une direction horizontale et ayant une section transversale elliptique dans laquelle un grand axe s'étend dans une direction verticale au niveau d'une partie de palier (12) et/ou d'une partie de broche (13), la partie de palier (12) et la partie de broche (13) du noyau (2) correspondant à la portion de palier (4) et à la partie de broche (5) du vilebrequin respectivement ; et **en ce que** l'on forme une portion creuse (3) dont la section transversale au niveau de la portion de palier (4) et/ou de la portion de broche (5) est elliptique.

4. Procédé pour fabriquer un vilebrequin creux moulé selon la revendication 3, **caractérisé en ce que** la portion creuse (3) et les trous à le (6) sont formés intégralement l'une avec les autres par moulage sous enveloppe en utilisant le noyau (2) qui est cintré dans la direction horizontale et qui inclut une pluralité de portions de base s'étendant vers un moule au niveau de la partie de palier (12) et/ou de la partie de broche (13).

5. Procédé pour fabriquer un vilebrequin creux moulé selon la revendication 3 ou 4, **caractérisé en ce que** la portion creuse (3) et les trous à huile (6) sont formés intégralement l'une avec les autres par moulage sous enveloppe en utilisant le noyau (2) qui est cintré dans la direction horizontale et qui inclut une pluralité de portions de base s'étendant verticalement vers le moule au niveau de la partie de palier (12) et/ou de la partie de broche (13).

6. Procédé pour fabriquer un vilebrequin creux moulé selon l'une quelconque des revendications 3 à 5, **caractérisé en ce qu'**une section transversale d'un noyau (2) pour la portion de bras (15) du vilebrequin a une section transversale elliptique dans laquelle un grand axe s'étend dans une direction verticale.
